# EUROPÄISCHE PATENTSCHRIFT

(11) **EP 2 366 653 B1**
(45) Veröffentlichungstag und Bekanntmachung des Hinweises auf die Patenterteilung: **24.10.2012**
(21) Anmeldenummer: 10156769.1
(22) Anmeldetag: 17.03.2010
(51) Int. Cl.: B66B 5/28, F16F 7/00

(54) **Puffer zum Abfangen von Stössen**
Impact buffer
Tampon destiné à absorber des chocs

(43) Veröffentlichungstag der Anmeldung: 21.09.2011
(73) Patentinhaber: Acla-Werke GmbH, 51065 Köln (DE)
(72) Erfinder:
(74) Vertreter: von Kreisler Selting Werner

(56) Entgegenhaltungen:
- WO-A2-2007/070208
- SU-A1- 1 081 105
- US-A- 4 515 248

## Beschreibung

Die Erfindung betrifft einen Puffer zum Abfangen von Stößen nach dem Oberbegriff des Anspruchs 1.

Die bislang für solche Zwecke verwendeten Puffer bestehen aus einem volumenkompressiblen, elastischen Pufferelement, das ein erstes E-Modul aufweist. Diese Puffer sind beispielsweise Puffer für eine Aufzugkabine bzw. für ein Gegengewicht einer Aufzugkabine. Die für diese Zwecke verwendeten Puffer werden Aufsetzpuffer genannt. Diese Puffer sind häufig in der Schachtgrube eines Aufzugschachts angeordnet.

Der Puffer könnte auch als Sicherheitspuffer im Kranbau oder als Puffer im Kfz-Bereich verwendet werden.

Die bisher verwendeten Puffer haben den Nachteil, dass sie eine relativ große Bauhöhe aufweisen. In den letzen Jahren wird jedoch z.B. beim Bau von Aufzügen versucht, die Schachtgruben immer kleiner auszuführen.

Der Erfindung liegt demzufolge die Aufgabe zu Grunde, einen Puffer der eingangs beschriebenen Art zu schaffen, der eine geringere Bauhöhe aufweist und dabei zumindest die gleiche Energieaufnahmekapazität besitzt.

Der Puffer könnte auch als Sicherheitspuffer im Kranbau oder als Puffer im Kfz-Bereich verwendet werden.

Die bisher verwendeten Puffer haben den Nachteil, dass sie eine relativ große Bauhöhe aufweisen. In den letzen Jahren wird jedoch z.B. beim Bau von Aufzügen versucht, die Schachtgruben immer kleiner auszuführen.

Der Erfindung liegt demzufolge die Aufgabe zu Grunde, einen Puffer der eingangs beschriebenen Art zu schaffen, der eine geringere Bauhöhe aufweist und dabei zumindest die gleiche Energieaufnahmekapazität besitzt.

Zur Lösung dieser Aufgabe dienen die Merkmale des Anspruchs 1.

Die Erfindung sieht in vorteilhafter Weise vor, dass mindestens ein Zusatzelement in dem Pufferelement eingeschlossen ist, das ein zweites E-Modul aufweist, wobei das zweite E-Modul des Zusatzelements größer ist als das erste E-Modul des Pufferelements.

Dies hat dem Vorteil, dass die Puffer-Bauhöhe gegenüber dem Stand der Technik reduziert werden kann, wobei der Puffer die gleiche bzw. eine höhere Energieaufnahmekapazität besitzt.

Das Zusatzelement kann elastisch sein. Dies hat den Vorteil, dass das Zusatzelement die durch Krafteinwirkung hervorgerufenen Verformungen des Puffers mit ausführen kann.

Das Zusatzelement kann um 300 - 700 %, vorzugsweise um 400-600%, elastisch verformbar sein.

Das Pufferelement weist ein erstes Kompressionsmodul und das Zusatzelement weist ein zweites Kompressionsmodul auf, wobei das zweite Kompressionsmodul größer ist als das erste Kompressionsmodul. Dies bedeutet, dass das Pufferelement volumenkompressibler ist als das Zusatzelement.

Das Zusatzelement kann vorzugsweise volumeninkompressibel sein.

Das Zusatzelement kann eine Kegelstumpfform aufweisen, wobei die Grundfläche des Zusatzelements orthogonal zur Kraftaufnahmeachse des Pufferelementes verlaufen kann.

Dies hat den Vorteil, dass die Bauhöhe weiter reduziert werden kann, wobei die Energieaufnahmekapazität konstant bleibt bzw. weiter erhöht werden kann.

Die Seitenflächen des Zusatzelementes können unter einem Winkel von 20° bis 80°, vorzugsweise unter einem Winkel von 30° bis 60°, in Bezug auf die Kraftaufnahmeachse des Pufferelementes verlaufen. Es hat sich herausgestellt, dass ein Winkel, der zwischen 40° und 50° liegt und vorzugsweise 45° beträgt, besonders vorteilhaft ist.

Das Zusatzelement kann eine gerade Kegelstumpfform aufweist. Dies ist insbesondere für eine gleichmäßige Kraftverteilung innerhalb des Pufferelements vorteilhaft.

Das Zusatzelement kann als hohler Kegelstumpf ausgebildet sein.

Es können mindestens zwei in Längsrichtung des Pufferelementes voneinander beabstandete Zwischenelemente in dem Pufferelement eingeschlossen sein.

Das Pufferelement kann aus geschäumten Kunststoff bestehen. Das Pufferelement kann um 80 bis 90% volumenkompressibel sein.

Im Folgenden werden unter Bezugnahme auf die Zeichnungen Ausführungsbeispiele der Erfindung näher erläutert.

Es zeigen schematisch:
- Fig. 1: einen Puffer zum Abfangen von Stößen,
- Fig. 2: den Puffer aus Figur 1 in der Draufsicht,
- Fig. 3: eine geschnittene Seitenansicht eines Zusatzelementes 3,
- Fig. 4: eine Draufsicht auf das Zusatzelement aus Figur 3,
- Fig. 5: statische Pufferkennlinien eines Puffers mit zwei Zusatzelementen und eines Puffers ohne Zusatzelemente.

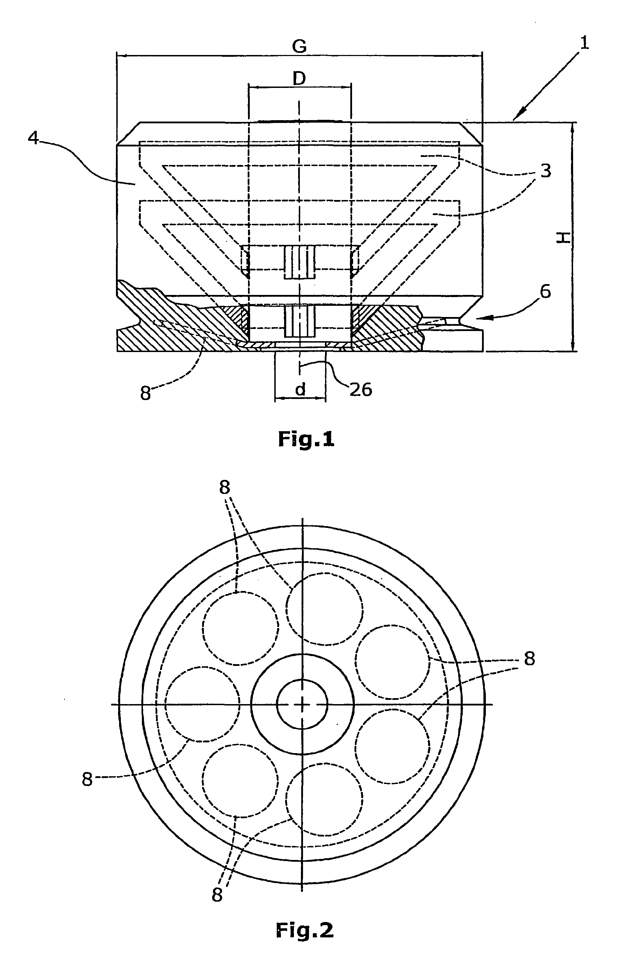

Fig. 1 zeigt einen Puffer 1 in der Seitenansicht. Der Puffer 1 weist eine zylindrische Form. Ferner weist der Puffer 1 ein Pufferelement 4 auf. Das Pufferelement 4 ist elastisch und volumenkompressibel. Das Pufferelement 4 ist vorzugsweise um bis zu 80 bis 90 % in Kraftrichtung kompressibel. Ferner weist das Pufferelement 4 vorzugsweise einen Luftanteil zwischen 60 und 70 % auf. Das Pufferelement 4 besteht aus geschäumten Kunststoff. Das Pufferelement 4 besteht vorzugsweise aus geschäumten Polyurethan-Elastomer.

Das Pufferelement 4 weist in dem Ausführungsbeispiel zwei Zusatzelemente 3 auf. Die Zusatzelemente 3 sind in dem Pufferelement 4 eingeschlossen. Die Zusatzelemente 3 sind schwimmend innerhalb des Pufferelementes 4 angeordnet. Die Zusatzelemente 3 weisen jeweils eine hohle Kegelstumpfform auf. Die hohle Kegelstumpfform ist vorzugsweise gerade. Die Kegelachse der hohlen Kegelstumpfform verläuft entlang der Längsachse 26 des Pufferelementes 4. Die in dem Puffer 1 einzuleitende Kraft wird entlang einer vorzugsweise vertikalen Krafteinleitungsachse in den Puffer 1 eingeleitet. Die Krafteinleitungsachse verläuft in der Längsachse 26 des Pufferelements 4. Die beiden Zusatzelemente 3 sind in Richtung der Längsachse 26 des Puffers 1 voneinander beabstandet angeordnet.

Es versteht sich, dass auch mehr als zwei Zusatzelemente 3 in dem Pufferelement 4 angeordnet sein können.

Der in Fig. 1 dargestellter Puffer 1 ist als Hohlzylinder ausgeführt. Der Puffer 1 weist ein Durchgangsloch mit einem Innendurchmesser D, einen Außendurchmesser G und einer Höhe H auf. Alternativ könnte der Puffer 1 auch als Vollzylinder ausgeführt sein. Auch kann der Puffer 1 alternativ als Vollprisma oder auch Hohlprisma ausgeführt sein. Alternativ kann der Puffer 1 eine elliptische Querschnittsfläche aufweisen.

Innerhalb des Pufferelementes 4 ist ferner im Bereich der Grundfläche eine Lochplatte 2 angeordnet, die Löcher 8 aufweist. Die Lochplatte 2 ist zur Befestigung des Puffers 1 vorgesehen. Alternativ könnte der Puffer 1 auch keine Lochplatte 2 aufweisen und anstelle dessen festgeklebt werden. Die Lochplatte 2 weist eine Bohrung mit dem Durchmesser d auf. Die Bohrung der Lochplatte ist vorzugsweise konzentrisch innerhalb des Durchgangslochs des Puffers 1 angeordnet.

Fig. 2 zeigt das Ausführungsbeispiel aus Fig. 1 in der Draufsicht. In Fig. 2 ist die auch der Teil der Lochplatte 2 in gestrichelten Linien dargestellt, der innerhalb des Puffers 1 angeordnet ist. Die Löcher 8 der Lochplatte 2 sind gut zu erkennen. Ebenfalls ist die zylindrische Form des Puffers 1 erkennbar. Die Zusatzelemente 3 sind in Fig. 2 nicht dargestellt.

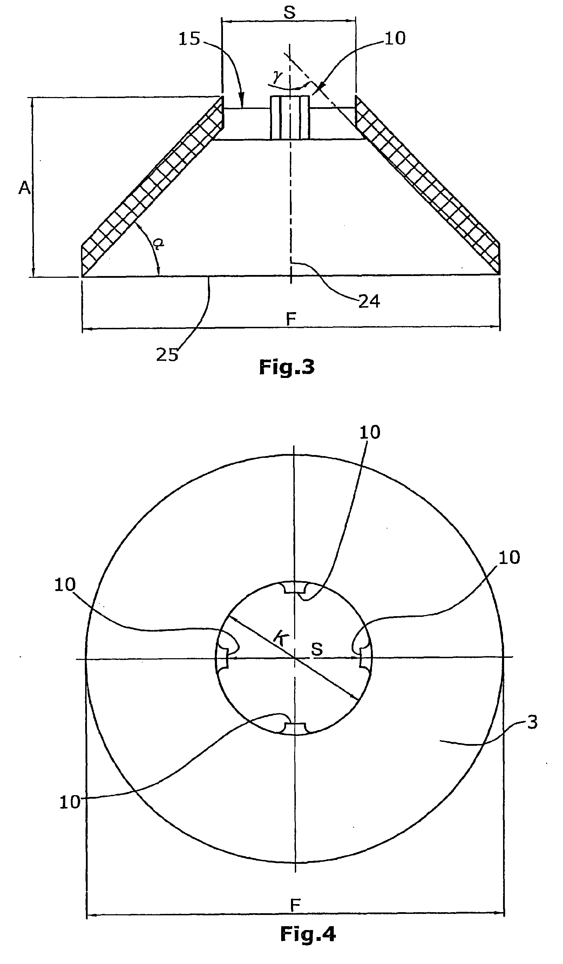

Fig. 3 und 4 zeigen ein Zusatzelement 3. Das Zusatzelement 3 weist ein höheres E-Modul auf als das Pufferelement 4. Ferner weist das Zusatzelement 3 ein höheres Kompressionsmodul auf als das Pufferelement 4. Vorzugsweise ist das Zusatzelement 3 volumeninkompressibel. Das Zuatzelement 3 kann beispielsweise aus einen homogen Polyurethan-Elastomer bestehen. Das Zusatzelement 3 könnte alternativ aus jedem anderem Material bestehen, sofern die Anforderungen an die Elastizität erfüllt sind. Das Zusatzelement 3 muss derart verformbar sein, dass es die Verformungen des Pufferelementes 4 bei Krafteinwirkung mit ausführen kann. Das Zusatzelement 3 ist in Fig. 3 als gerader hohler rotationssymmetrischer Kegelstumpf ausgeführt. Der Kegelstumpf weist eine Grundfläche 25 mit einem Außendurchmesser F und eine Deckfläche 15 mit einem Innendurchmesser K bzw. S auf. Es könnten jedoch auch andere Kegelstümpfe eingesetzt werden. Der Kegelstumpf könnte beispielsweise eine polygone, runde oder elliptische Grund- und Deckfläche aufweisen.

Bei einer polygonen Grundfläche ist der Kegelstumpf pyramidenförmig. Auch kann das Zusatzelement 3 eine schiefe Kegelstumpfform aufweisen.

Zur Fertigung des erfindungsgemäßen Puffers 1 aus Figur 1 wird innerhalb einer zylindrischen Form, die einen Durchmesser G aufweist, mittig ein Kern platziert, der einen Durchmesser D aufweist. An dem Kern werden die beiden Zusatzelemente 3 und die Lochplatte 2 koaxial angeordnet. In einem weiterem Schritt wird dann Kunststoff in diese Form eingebracht und geschäumt. Damit sich der schäumende Kunststoff gleichmäßig in der Form verteilen kann, weist die Lochplatte Löcher 8 auf. Außerdem ist der Außendurchmesser F des Zusatzelementes 3 kleiner als der Außendurchmesser G des Puffers 1. Ferner weisen die kegelstumpfförmigen Zwischenelemente 3 an der Deckseite 15 in radialer Richtung nach innen vorstehende Vorsprünge 10 auf. Mit den Vorsprüngen 10 liegen die Zwischenelemente 3 an dem in die Spritzform eingebrachten Kern an. Somit kann der geschäumte Kunststoff auch zwischen den Vorsprüngen 10 hindurchtreten, was zur besseren Verteilung des schäumenden Kunststoffes dient.

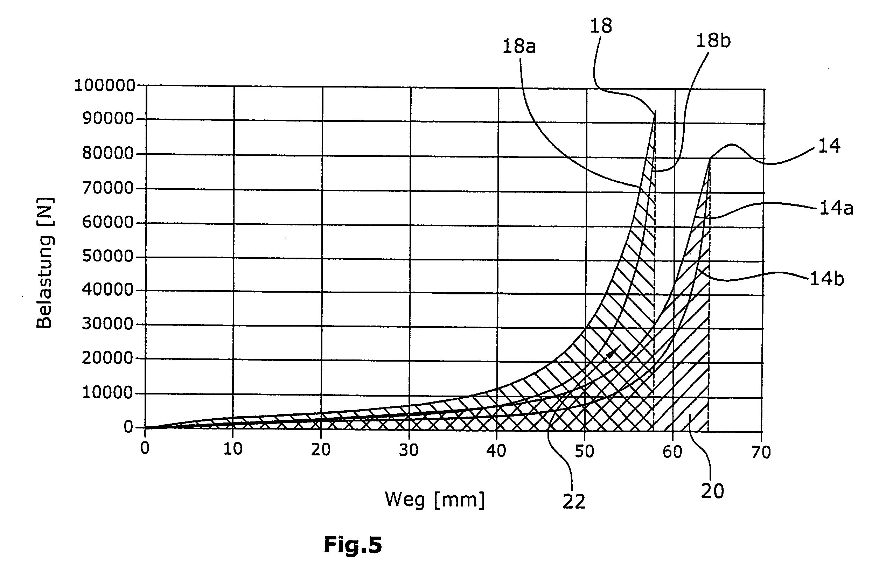

Das koaxial angeordnete Zusatzelement 3, das in den Figuren 3 und 4 genauer dargestellt ist, weist einen Winkel y in Bezug auf die Kegelachse 24 und somit, wenn das Zusatzelement 3 innerhalb des Pufferelementes 4 eingeschlossen ist, in Bezug auf die Krafteinleitungsachse auf. Der Winkel y liegt vorzugsweise zwischen 20 bis 80° bzw. zwischen 30 und 60°. Besonders vorteilhaft ist ein Winkel y von 45°. Die Form des Zusatzelementes 3 und insbesondere der Winkel den die Seitenflächen 55 innerhalb des Pufferelementes 4 in Bezug auf die Krafteinleitungsachse haben, haben einen großen Einfluss auf den Verlauf der Pufferkennlinie, wie sie in Figur 5 gezeigt ist. Das Zusatzelement 3 ist vorzugsweise innerhalb des Pufferelements 4 derart angeordnet, dass die Kegelstumpfachse entlang der vertikalen Krafteinleitungsachse verläuft. Die Deckfläche 15 kann in Krafteinleitungsrichtung vor oder hinter der Grundfläche 25 angeordnet sein.

Fig. 5 zeigt ein Belastungs-Weg-Diagramm des Puffers 1. In dem Belastungs-Weg-Diagramm ist eine Pufferkennlinie 18 eines Puffers dargestellt, der ähnlich wie der Puffer 1 aus Figuren 1 und 2 aufgebaut ist. Ferner ist die Pufferkennlinie 14 eines Puffers dargestellt, der lediglich eine Lochplatte, jedoch keine Zusatzelemente 3 aufweist. Während der Krafteinleitung werden die Puffer komprimiert. Den Weg, um den der jeweilige Puffer komprimiert wird, ist auf der X-Achse dargestellt. Die Kraft, die dafür benötigt wird, ist auf der Y-Achse dargestellt. Die Arbeit, d.h. die Energie, die der Puffer aufnimmt, ist die Fläche unterhalb der jeweiligen Kennlinie. Der Puffer mit den zwei Zusatzelementen 3 mit der Pufferkennlinie 18 nimmt die Energie auf, die durch die Fläche 22 gekennzeichnet ist. Der Puffer mit der Pufferkennlinie 14 nimmt die Energie auf, die durch die Fläche 20 gekennzeichnet ist. Beide Pufferkennlinien weisen eine Hysteresekurve auf.

Aus dem Belastungs-Weg-Diagramm ist deutlich zu erkennen, dass bei gleichbleibender aufgenommener Energie der Weg, um den der Puffer mit zwei Zusatzelementen komprimiert wird, wesentlich geringer ist. Dies hat den Vorteil, dass die Puffer, die ein Zusatzelement 3 gemäß der vorliegenden Beschreibung aufweisen, eine wesentlich geringere Bauhöhe aufweisen.

## Patentansprüche

1. Puffer (1) zum Abfangen von Stößen mit
- einem elastischen Pufferelement (4) aus einem Material, das ein erstes E-Modul aufweist, und
- einer Kraftaufnahmeachse
- wobei das Pufferelement (4) zumindest in Richtung der Kraftaufnahmeachse komprimierbar ist,
**dadurch gekennzeichnet,**
**dass** mindestens ein Zusatzelement (3) innerhalb des Pufferelementes (4) eingeschlossen ist, das ein zweites E-Modul aufweist, wobei das zweite E-Modul größer ist als das erste E-Modul.

2. Puffer (1) nach Anspruch 1, **dadurch gekennzeichnet, dass** das Zusatzelement (3) elastisch ist.

3. Puffer (1) nach Anspruch 2, **dadurch gekennzeichnet, dass** das Zusatzelement (3) um 300 - 700 %, vorzugsweise um 400-600%, elastisch dehnbar ist.

4. Puffer (1) nach einem der Ansprüche 1 bis 3, **dadurch gekennzeichnet, dass** das Pufferelement (4) ein erstes Kompressionsmodul aufweist und das Zusatzelement (3) ein zweites Kompressionsmodul aufweist, wobei das zweite Kompressionsmodul größer ist als das erste Kompressionsmodul.

5. Puffer (1) nach einem der Ansprüche 1 bis 4, **dadurch gekennzeichnet, dass** das Zusatzelement (3) volumeninkompressibel ist.

6. Puffer (1) nach einem der Ansprüche 1 bis 5, **dadurch gekennzeichnet, dass** das Zusatzelement (3) eine Kegelstumpfform aufweist, wobei die Grundfläche des Zusatzelements (3) orthogonal zur Kraftaufnahmeachse des Pufferelementes (4) verläuft.

7. Puffer (1) nach Anspruch 6, **dadurch gekennzeichnet, dass** die Seiten- oder Mantelflächen des Zusatzelementes (3) unter einem Winkel von 20° bis 80°, vorzugsweise unter einem Winkel von 30° bis 60°, in Bezug auf die Kraftaufnahmeachse des Pufferelementes (4) verlaufen.

8. Puffer (1) nach Anspruch 6 oder 7, **dadurch gekennzeichnet, dass** das Zusatzelement (3) eine gerade Kegelstumpfform aufweist.

9. Puffer (1) nach einem der Ansprüche 6 bis 8, **dadurch gekennzeichnet, dass** das Zusatzelement (3) als hohler Kegelstumpf ausgebildet ist.

10. Puffer (1) nach einem der Ansprüche 1 bis 9, **dadurch gekennzeichnet, dass** mindestens zwei in Längsrichtung des Pufferelementes (4) voneinander beabstandete Zusatzelemente (3) in dem Pufferelement (4) eingeschlossen sind.

11. Puffer (1) nach einem der Ansprüche 1 bis 10, **dadurch gekennzeichnet, dass** das Pufferelement (4) aus geschäumten Kunststoff besteht.

12. Puffer (1) nach einem der Ansprüche 1 bis 11, **dadurch gekennzeichnet, dass** das Pufferelement (4) in Richtung der Kraftaufnahmeachse um 80 bis 90% komprimierbar ist.

13. Puffer (1) nach einem der Ansprüche 1 bis 12, **dadurch gekennzeichnet, dass** das Material des Puffers volumenkompressibel ist und bezogen auf das Volumen einen Luftanteil von ca. 50 bis 80 % , vorzugsweise 60 bis 70 %, aufweist.

## Claims

1. A buffer (1) for absorbing impacts, comprising
- an elastic buffer element (4) made of a material having a first e-module, and
- a force take-up axis,
- said buffer element (4) being compressible at least in the direction of said force take-up axis,
**characterized in**
**that** at least one additional element (3) having a second e-module is enclosed in said buffer element (4), said second e-module being larger than said first e-module.

2. The buffer (1) according to claim 1, **characterized in that** said additional element (3) is elastic.

3. The buffer (1) according to claim 2, **characterized in that** the additional element (3) is elastically deformable by 300 - 700 %, preferably by 400 - 600 %.

4. The buffer (1) according to any one of claims 1 to 3, **characterized in that** the buffer element (4) has a first compression module and the additional element (3) has a second compression module, said second compression module being larger than said first compression module.

5. The buffer (1) according to any one of claims 1 to 4, **characterized in that** the additional element (3) is incompressible in volume.

6. The buffer (1) according to any one of claims 1 to 5, **characterized in that** the additional element (3) has the frustoconical shape, the base surface of the additional element (3) extending orthogonally to the force take-up axis of the buffer element (4).

7. The buffer (1) according to claim 6, **characterized in that** the lateral or outer surfaces of the additional element (3) extend at an angle from 20° to 80°, preferably at an angle from 30° to 60°, relative to force take-up axis of the buffer element (4).

8. The buffer (1) according to claim 6 or 7, **characterized in that** the additional element (3) has a straight-lined frustoconical shape.

9. The buffer (1) according to any one of claim 6 to 8, **characterized in that** the additional element (3) has a hollow frustoconical shape.

10. The buffer (1) according to any one of claims 1 to 9, **characterized in that** least two additional elements (3), spaced from each other in the longitudinal direction of the buffer element (4), are enclosed in the buffer element (4).

11. The buffer (1) according to any one of claims 1 to 10, **characterized in that** the buffer element (4) is made of foamed plastic material.

12. The buffer (1) according to any one of claims 1 to 11, **characterized in that** the buffer element (4) is compressible by 80 to 90 % in the direction of the force take-up axis.

13. The buffer (1) according to any one of claims 1 to 12, **characterized in that** the material of the buffer is volume-compressible and with regard to the volume has an air content of about 50 to 80 %, preferably 60 to 70 %.

## Revendications

1. Tampon (1) destiné à absorber les chocs, avec
- un élément de tampon (4) élastique réalisé dans un matériau qui présente un premier module E, et
- un axe de reprise de force,
- l'élément de tampon (4) pouvant être comprimé au moins dans la direction de l'axe de reprise de force,
**caractérisé en ce**
**qu'**au moins un élément supplémentaire (3) est inclus à l'intérieur de l'élément de tampon (4) et présente un deuxième module E, le deuxième module E étant plus grand que le premier module E.

2. Tampon (1) selon la revendication 1, **caractérisé en ce que** l'élément supplémentaire (3) est élastique.

3. Tampon (1) selon la revendication 2, **caractérisé en ce que** l'élément supplémentaire (3) est extensible élastiquement de 300 - 700 is, de préférence de 400 - 600 %.

4. Tampon (1) selon une des revendications 1 à 3, **caractérisé en ce que** l'élément de tampon (4) présente un premier module de compression, et **en ce que** l'élément supplémentaire (3) présente un deuxième module de compression, le deuxième module de compression étant plus grand que le premier module de compression.

5. Tampon (1) selon une des revendications 1 à 4, **caractérisé en ce que** l'élément supplémentaire (3) est incompressible en volume.

6. Tampon (1) selon une des revendications 1 à 5, **caractérisé en ce que** l'élément supplémentaire (3) présente une forme de cône tronqué, la surface de base de l'élément supplémentaire (3) étant orthogonale par rapport à l'axe de reprise de force de l'élément de tampon (4).

7. Tampon (1) selon la revendication 6, **caractérisé en ce que** les surfaces latérales ou d'enveloppe de l'élément supplémentaire (3) font un angle de 20° à 80°, de préférence font un angle de 30° à 60°, par rapport à l'axe de reprise de force de l'élément de tampon (4).

8. Tampon (1) selon la revendication 6 ou 7, **caractérisé en ce que** l'élément supplémentaire (3) présente une forme de cône tronqué rectiligne.

9. Tampon (1) selon une des revendications 6 à 8, **caractérisé en ce que** l'élément supplémentaire (3) est constitué en forme de cône tronqué creux.

10. Tampon (1) selon une des revendications 1 à 9, **caractérisé en ce qu'**au moins deux éléments supplémentaires (3) espacés l'un de l'autre dans la direction longitudinale de l'élément de tampon (4) sont inclus dans l'élément de tampon (4).

11. Tampon (1) selon une des revendications 1 à 10, **caractérisé en ce que** l'élément de tampon (4) est réalisé en matière plastique expansée.

12. Tampon (1) selon une des revendications 1 à 11, **caractérisé en ce que** l'élément de tampon (4) peut être comprimé de 80 à 90 % dans la direction de l'axe de reprise de force.

13. Tampon (1) selon une des revendications 1 à 12, **caractérisé en ce que** le matériau du tampon est compressible en volume et présente, rapportée au volume, une proportion d'air d'environ 50 à 80%, de préférence de 60 à 70%.
